# EUROPEAN PATENT APPLICATION

(11) **EP 4 811 296 A1**
(43) Date of publication of application: **23.09.2026**
(21) Application number: 26153120.6
(22) Date of filing: 21.01.2026
(51) Int. Cl.: G06V 10/25, G06V 20/69

(54) **FEATURE-VALUE ACQUISITION METHOD AND FEATURE-VALUE ACQUISITION DEVICE**

(30) Priority: 18.03.2025 JP 2025043331
(71) Applicant: SCREEN Holdings Co., Ltd., Kyoto-shi, Kyoto 602-8585 (JP)
(72) Inventor: YASUDA, Takuya, Kyoto-shi, Kyoto, 602-8585 (JP)
(74) Representative: Goddar, Heinz J.

(57) **Abstract**

Segmented images are prepared by dividing a large image. An intermediate target region is extracted from one segmented image selected, and an intermediate-region information item (82) indicating the range of the intermediate target region and an intermediate feature value (83) of the intermediate target region are acquired. This is repeated using each segmented image as the above one segmented image. Based on the acquired intermediate-region information items (82), an integrated feature value (83a) of a target region that integrates multiple intermediate target regions adjoining one another in the large image is obtained from intermediate feature values (83) of the multiple intermediate target regions.

## Description

### CROSS-REFERENCE TO RELATED APPLICATIONS

This application claims priority benefit of Japanese Patent Application No. JP2025-43331 filed in the Japan Patent Office on March 18, 2025, the entire disclosure of which is incorporated herein by reference.

### TECHNICAL FIELD

The present invention relates to a technique for acquiring a feature value of a target region in an image.

### BACKGROUND ART

Conventionally, it is common practice to extract (i.e., detect) a specific region from an image and acquire feature values of this region. For example, a defect inspection apparatus determines whether a candidate defective region in an image indicates an actual defect, from feature values such as the brightness or size of this region. A cell analyzer determines the viability or the like of cells from feature values such as the brightness or contour shapes of cell regions in an image.

As a method of reducing computational cost of acquiring feature values, according to Japanese Patent Application Laid-Open No. 2017-84006 (hereinafter, referred to as "Document 1"), an image is divided into multiple segmented regions based on pixel color, and a first feature value is extracted from each segmented region. Using the first feature value, a second feature value is generated from a category discrimination score of the segmented region and a category discrimination score of an integrated region that includes the segmented region. Then, a category of the segmented region is output based on the second feature value.

In the case of acquiring feature values of a specific region in an image, the entire image needs to be stored in memory for image processing. In Document 1 as well, it is necessary to store the entire image in memory in order to determine the segmented regions. However, in the case of a large image, developing the image in memory requires a computer to be equipped with large-capacity memory.

### SUMMARY OF THE INVENTION

It is an object of the present invention to reduce the amount of memory required to acquire feature values of a targe region in a large image.

Aspect 1 of the present invention is a feature-value acquisition method of acquiring a feature value of a target region in a large image. The feature-value acquisition method includes a) preparing a plurality of segmented images obtained by dividing a large image, b) extracting an intermediate target region from one segmented image and acquiring an intermediate-region information item and an intermediate feature value, the intermediate-region information item indicating a range of the intermediate target region, the intermediate feature value being a feature value related to the intermediate target region, c) repeating the operation b), using each of the plurality of segmented images as the one segmented image, and d) based on a plurality of intermediate-region information items obtained by the operation c), acquiring a feature value of a region that integrates a plurality of intermediate target regions adjoining each other in the large image from intermediate feature values of the plurality of intermediate target regions.

According to the present invention, it is possible to reduce the amount of memory required to acquire feature values of a target region in a large image.

Aspect 2 of the present invention is the feature-value acquisition method according to Aspect 1, in which the intermediate-region information item is obtained by run-length compression of an information item that indicates the range of the intermediate target region.

Aspect 3 of the present invention is the feature-value acquisition method according to Aspect 1 (or according to Aspect 1 or 2), in which the intermediate feature value is a feature value based on brightness in the intermediate target region.

Aspect 4 of the present invention is the feature-value acquisition method according to Aspect 3, in which the intermediate feature value includes at least one feature value of the intermediate target region selected from a sum of brightness values of pixels, a sum of squares of brightness values of pixels, a sum of local variations in brightness values of pixels, and a histogram of brightness values of pixels.

Aspect 5 of the present invention is the feature-value acquisition method according to Aspect 1 (or according to any one of Aspects 1 to 4), in which each time the operation b) is repeated in the operation c), memory that stores the one segmented image releases an area in which the one segmented image is stored, and a next one segmented image is stored in the memory.

Aspect 6 of the present invention is the feature-value acquisition method according to any one of Aspects 1 to 5, in which the operation d) involves acquiring a region information item about an integrated target region that integrates the plurality of intermediate target regions, based on the plurality of intermediate-region information items about the plurality of intermediate target regions. The feature-value acquisition method further includes e) acquiring a feature value related to a shape of the integrated target region from the region information item about the integrated target region.

Aspect 7 of the present invention is a feature-value acquisition device that acquires a feature value of a target region in a large image. The feature-value acquisition device includes memory that successively stores a segmented image selected from a plurality of segmented images obtained by dividing a large image, a segmented-region processing unit that extracts an intermediate target region from a segmented image stored in the memory and acquires an intermediate-region information item and an intermediate feature value, the intermediate-region information item indicating a range of the intermediate target region, the intermediate feature value being a feature value of the intermediate target region, and an integration processing unit that, based on a plurality of intermediate-region information items, acquires a feature value of a region that integrates a plurality of intermediate target regions adjoining each other in the large image from intermediate feature values of the plurality of intermediate target regions.

These and other objects, features, aspects and advantages of the present invention will become more apparent from the following detailed description of the present invention when taken in conjunction with the accompanying drawings.

### BRIEF DESCRIPTION OF DRAWINGS

Fig. 1 is a diagram showing a configuration of a computer.
Fig. 2A is a block diagram showing a functional configuration of a feature-value acquisition device.
Fig. 2B is a block diagram showing a functional configuration of the feature-value acquisition device.
Fig. 3 is a flowchart for a feature-value acquisition method.
Fig. 4 is a diagram showing an example of a large image.
Fig. 5A is a diagram showing a segmented image.
Fig. 5B is a diagram showing a segmented image.
Fig. 6 is a diagram for describing the integration of intermediate target regions.

### DESCRIPTION OF EMBODIMENTS

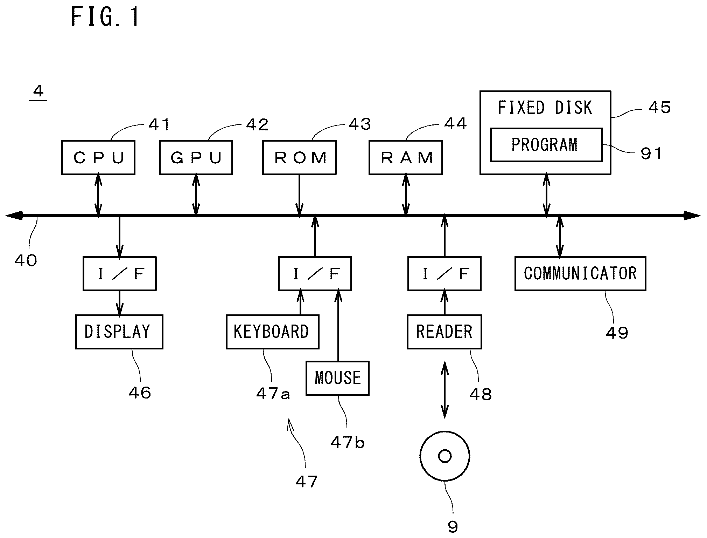

Fig. 1 is a diagram showing a configuration of a computer 4 that functions as a feature-value acquisition device according to one embodiment of the present invention. The feature-value acquisition device is a device that acquires feature values of a target region in a large image. Various images may be used as the large image, but in the present embodiment, the large image is a stained image of biomedical tissue. The target region is a region that indicates a cell.

Feature values are primarily related to the brightness (or luminance) of pixels, i.e., pixel values. Examples of the feature values include feature values of a target region including a sum of brightness values, a sum of squares of brightness values, a sum of local variations in brightness, a histogram of brightness values, and a total number of pixels. As will be described later, the feature values may include those based on the shape of the target region such as contour length, approximate ellipse, inscribed circle, circumscribed rectangle, or the center of gravity. When simply referred to as "feature values" in the following description, the feature values exclude those based on shape (hereinafter, referred to as "shape feature values"). Feature values including shape feature values are expressed as, for example, "feature values (including shape feature values)".

The computer 4 has a configuration of a general computer system that includes a CPU 41, a GPU 42, ROM 43, RAM 44, a fixed disk 45, a display 46, an input device 47, a reader 48, a communicator 49, and a bus 40. The CPU 41 performs various computational processing. The GPU 42 performs various computational processing related to image processing at high speed. The ROM 43 stores basic programs. The RAM 44 stores various types of information. The RAM 44 shown in Fig. 1 includes image memory, i.e., so-called graphic memory. The fixed disk 45 stores information. The fixed disk 45 is a so-called hard disk drive. The display 46 displays various types of information such as images.

The input device 47 includes a keyboard 47a and a mouse 47b that accept input from an operator. The reader 48 reads information from a computer-readable recording medium 9 such as an optical disk, a magnetic disk, a magneto-optical disk, or a memory card. The display 46, the keyboard 47a, the mouse 47b, and the reader 48 are connected to the bus 40 via interfaces (I/Fs). The communicator 49 transmits and receives signals to and from devices or the like located outside the computer 4. The bus 40 serves as a signal circuit that connects the CPU 41, the GPU 42, the ROM 43, the RAM 44, the fixed disk 45, the display 46, the input device 47, the reader 48, and the communicator 49.

In the computer 4, a program 91 is read from the recording medium 9 via the reader 48 and stored in the fixed disk 45 in advance. The program 91 may be stored in the fixed disk 45 via a network. The CPU 41 and the GPU 42 execute computational processing in accordance with the computer-readable program 91 while using the RAM 44 and the fixed disk 45. The CPU 41 and the GPU 42 function as operation parts. Any other configuration that functions as an operation part may be adopted in addition to the CPU 41 and the GPU 42.

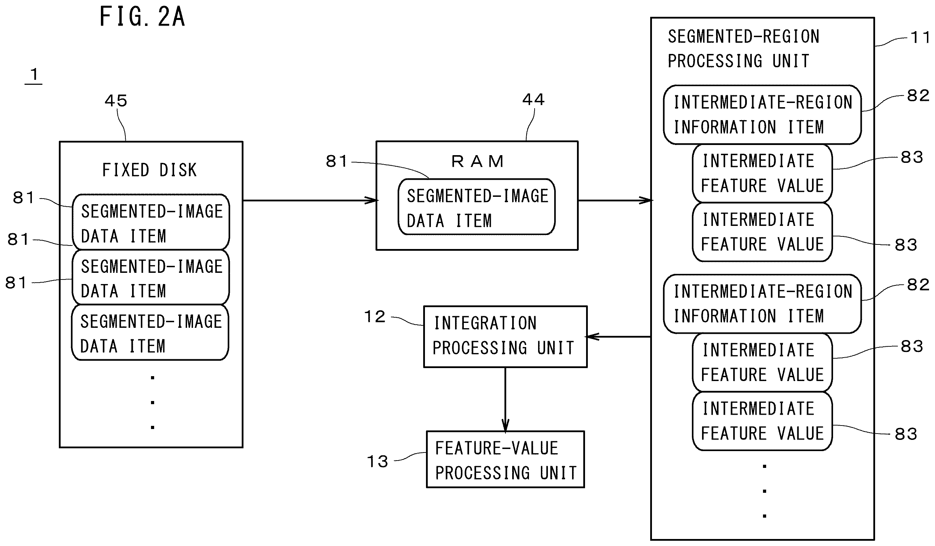

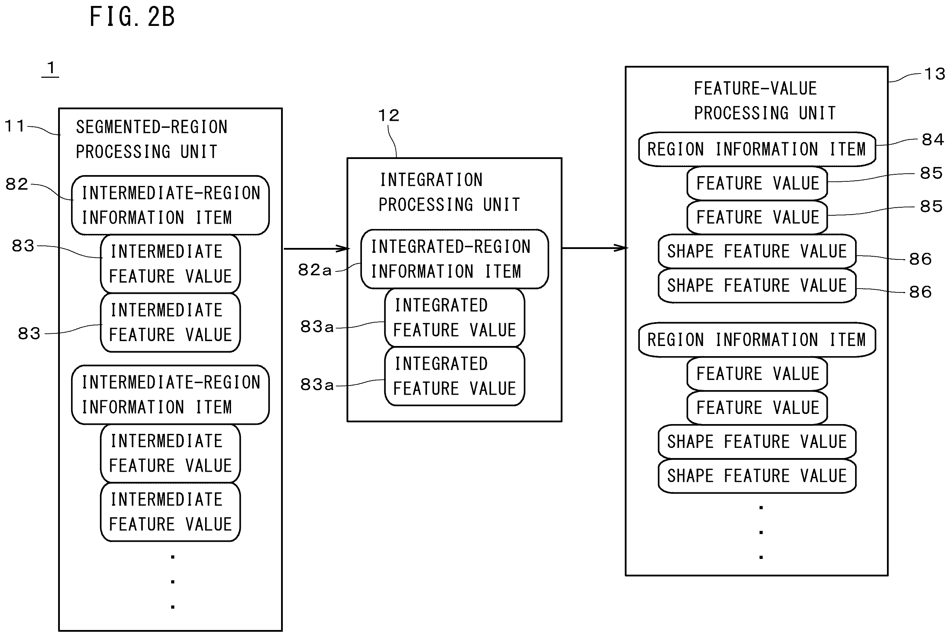

Figs. 2A and 2B are block diagrams showing functional configurations of the feature-value acquisition device 1 realized by the aforementioned computer 4 executing computational processing or the like in accordance with the program 91. Specifically, operations described below are performed by a processor such as a CPU, a GPU, or a dedicated circuit (which may be a single processor unit or a group of multiple processor units) executing computational processing with reference to information stored in various storages such as RAM or a fixed disk. The whole or part of the functional configurations may be realized by dedicated electric circuits. Alternatively, these functional configurations may be realized by multiple computers. The program 91 is a computer-readable program for causing the computer 4 to acquire feature values of a target region in a large image.

In the functional configurations shown in Figs. 2A and 2B, a segmented-region processing unit 11, an integration processing unit 12, and a feature-value processing unit 13 are primarily realized by the CPU 41, the GPU 42, the ROM 43, the RAM 44, the fixed disk 45, and their surrounding configuration shown in Fig. 1. Fig. 2A shows the segmented-region processing unit 11, the integration processing unit 12, and the feature-value processing unit 13 as separate functional configurations from the RAM 44 and the fixed disk 45, but they do not need to be strictly distinguished. In Fig. 2A, the RAM 44 and the fixed disk 45 are primarily shown as functions that store segmented-image data items 81 which will be described later.

The fixed disk 45 stores multiple segmented-image data items 81. Each segmented-image data item 81 is a data item obtained by dividing an original large image. The segmented image data items 81 are conceptually generated as blocks of data corresponding to segmented images, and therefore they will be described below as countable data items such as one, two, and so on. The same also applies to other similar data. The fixed disk 45 may store data about the large image without dividing it. The RAM 44 (primarily a portion of the graphic memory) stores one segmented-image data item 81 that is selected and read from the fixed disk 45. The RAM 44 does not have enough capacity to store all the segmented-image data items 81. That is, the large image is a huge image that cannot be expanded at once in the RAM 44. Preferably, the RAM 44 does not have enough capacity to store two segmented-image data items 81, and stores only one segmented-image data item 81.

In the case of storing data about a large image in the fixed disk 45 without dividing it, the data about the large image is stored in the fixed disk 45 such that a portion corresponding to each segmented-image data item 81 is readable. Then, this portion is read and stored in the RAM 44. In this way, data about multiple segmented images obtained by dividing the large image may be prepared in various forms in the fixed disk 45 as long as it is substantially obtained as the segmented-image data items 81.

Processing that is performed on the segmented images described below (including the operation of storing data) is, to be precise, processing that is performed on the segmented-image data items 81. Similarly, processing that is performed on the other images or regions is, to be precise, processing that is performed on data about these images or regions. Processing that is performed on images or regions may be, as appropriate, read as processing that is performed on data.

The segmented-region processing unit 11 generates one or more (preferably, multiple) intermediate-region information items 82. The intermediate-region information items 82 are conceptually generated as a block of information items corresponding to an intermediate target region described later, and therefore it is described below as countable information items such as one, two, and so on. The same also applies to other similar information. Each intermediate-region information item 82 is associated with one or more intermediate feature values 83. The integration processing unit 12 shown in Fig. 2B integrates intermediate target regions as necessary to acquire one or more integrated-region information items 82a. The integration processing unit 12 also integrates intermediate feature values 83 as necessary to acquire integrated feature values 83a. Each integrated-region information item 82a is associated with one or more integrated feature values 83a.

The feature-value processing unit 13 accepts input of intermediate-region information items 82 that are not integrated and the integrated-region information items 82a as region information items 84, and accepts input of intermediate feature values 83 that are not integrated and the integrated feature values 83a as feature values 85. The feature-value processing unit 13 further generates additional feature values 85 by performing computational processing on the feature values 85 and acquires shape feature values 86 based on the region information items 84. The feature values 85 and the shape feature values 86 are each associated with their corresponding region information item 84.

Details of the operations of the segmented-region processing unit 11, the integration processing unit 12, and the feature-value processing unit 13 will be described later.

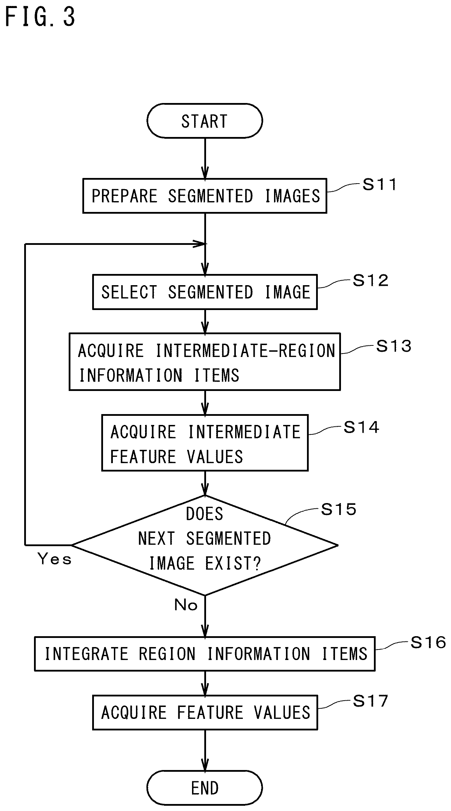

Fig. 3 is a flowchart for a feature-value acquisition method (which may partially include operations performed by operators) that is executed by the computer 4.

First, multiple segmented images (to be precise, segmented-image data items 81) are prepared by dividing a large image (step S11). For example, the large image is an image consisting of hundreds of thousands of pixels. Here, multiple segmented images are prepared by being stored in the fixed disk 45 of the computer 4, but they may be prepared in a different fixed disk via a network. As another alternative, as already described, multiple segmented images may be substantially prepared by storing a large image in the fixed disk 45 such that a portion corresponding to each segmented image is readable.

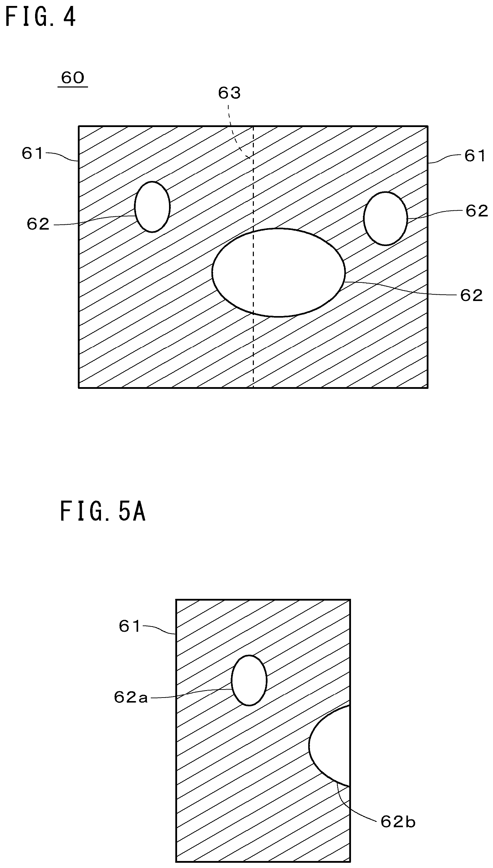

Fig. 4 is a diagram showing an example of a large image 60. The large image 60 includes a plurality of target regions 62. In the case where the large image 60 is a stained image of a living organism, the target regions 62 correspond to regions of cells. Although numerous target regions 62 actually exist, Fig. 4 shows only three of them for the sake of simplicity. The broken line 63 in the center shown in Fig. 4 indicates the position at which the large image 60 is divided. In practice, the large image is divided into numerous segmented images, but Fig. 4 shows the large image divided into two segmented images 61. Typically, the large image is divided into multiple segmented images both vertically and horizontally, and each segmented image is rectangular. Preferably, the large image is divided into segmented images of a predetermined width both vertically and horizontally.

The large image is an image of a size that cannot be stored at once in the memory of the feature-value acquisition device 1. Each segmented image is an image of a size that can be stored in the memory. Preferably, the memory cannot store two segmented images. Thus, the feature-value acquisition device 1 uses small-capacity memory. This eliminates the need to use an expensive computer as the computer 4 to implement the feature-value acquisition device 1.

When multiple segmented images have been prepared, the feature-value acquisition device 1 selects one of the segmented images (step S12).

Fig. 5A is a diagram showing the segmented image 61 shown on the left side in Fig. 4. The segmented image 61 includes the target region 62 shown on the left side in Fig. 4 (assigned a reference sign 62a in Fig. 5A) and part of the target region 62 shown in the center in Fig. 4 (assigned a reference sign 62b in Fig. 5A). In the following description, the regions 62a and 62b are referred to as "intermediate target regions". Using the RAM 44 as a work area, the segmented-region processing unit 11 detects the intermediate target regions 62a and 62b from the segmented image 61 and acquires information items indicating these target region as two intermediate-region information items 82, respectively.

Specifically, an image (e.g., a binary image) showing the intermediate target regions is output by inputting the segmented image to a learning model (e.g., a learning model constructed by deep learning) that extracts cells from an image. Accordingly, the intermediate target regions are extracted from the segmented image. Then, the segmented-region processing unit 11 performs run-length compression on the intermediate target regions in the binary image to generate the intermediate-region information items 82 that indicate the ranges of the intermediate target regions (step S13). Thus, the intermediate-region information items 82 are obtained by run-length compression of information items indicating the ranges of the intermediate target regions.

To be more specific, pixel values "1" that are continuous in the row direction in the binary image undergo run-length compression and are expressed as elements that combine "starting-point coordinates" and "length". Then, for each intermediate target region, a group of the above-described elements is detected and assigned a number (labeled) to acquire an intermediate-region information item 82. Through the generation of the intermediate-region information item 82, each intermediate target region can be treated as a separate object. Note that the run-length compression may be executed after numbers are assigned to the respective intermediate target regions in the binary image from which the intermediate target regions are extracted.

By processing the segmented image 61 shown in Fig. 5A, the segmented-region processing unit 11 further acquires intermediate feature values 83 that are feature values of the intermediate target regions 62a and 62b (step S14). At least some of the intermediate feature values 83 are based on brightness (pixel values). For example, the intermediate feature values 83 include at least one of the features of each intermediate target region selected from a sum of brightness values (of pixels), a sum of squares of brightness values, a sum of local variations in brightness, a histogram of brightness values, and a total number of pixels. In the case where the large image is a color image, the intermediate feature values may be based on hue. Hue is also a feature value based on the brightness of each color element, so that the feature value based on hue can also be regarded as a feature value based on brightness in a broad sense.

In the case where each intermediate target region is a cell, the intermediate feature values may, for example, be feature values of a region within a range of a certain distance outside the contour of the intermediate target region, such as a sum of brightness values, a sum of squares of the brightness values, a sum of local variations in brightness, a histogram of the brightness values, and a total number of pixels. The intermediate feature values may also be feature values of a region located within a certain distance or more inside the counter of a corresponding intermediate target region, such as a sum of brightness values, a sum of squares of brightness values, a sum of local variations in brightness, a histogram of brightness values, and a total number of pixels. Thus, the intermediate feature values are not limited to feature values based on pixels within the intermediate target region, and are acquired as feature values related to the intermediate target region.

As shown in Figs. 2A and 2B, the intermediate feature values 83 are stored in association with the intermediate-region information items 82 (e.g., stored in the space area of the RAM 44 or in the fixed disk 45).

When the processing is completed for the one segmented image, the RAM 44 releases the area in which the segmented-image data item 81 is stored, and the next segmented image is selected and the segmented-image data item 81 about the selected segmented image is stored in the RAM 44 (steps S15 and S12). Then, similar processing is performed on the newly selected segmented image to acquire intermediate-region information items 82 and intermediate feature values 83 (steps S13 and S14).

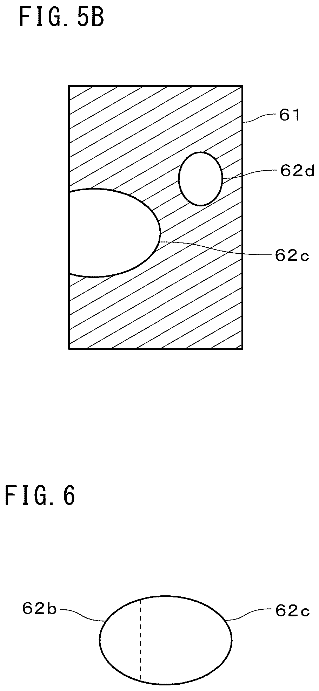

Fig. 5B is a diagram showing the segmented image 61 shown on the right side in Fig. 4, i.e., the next segmented image. The segmented image 61 includes, as intermediate target regions, the target region 62 shown on the right side in Fig. 4 (assigned a reference sign 62d in Fig. 5B) and part of the target region 62 shown in the center in Fig. 4 (assigned a reference sign 62c in Fig. 5B). Using the RAM 44 as a work area, the segmented-region processing unit 11 acquires information items indicating the intermediate target regions 62c and 62d, as intermediate-region information items 82. That is, the intermediate target regions 62c and 62d are extracted from the segmented image 61, and the two intermediate-region information items 82 are generated as information obtained by run-length compression of information items indicating the ranges of the intermediate target regions 62c and 62d (step S13). Each intermediate-region information item 82 is assigned a number.

By processing the segmented image 61, the segmented-region processing unit 11 further acquires intermediate feature values 83 that are feature values related to the intermediate target regions 62c and 62d (step S14). As described above, the intermediate feature values 83 are primarily related to brightness (pixel values).

Although Fig. 4 shows the two segmented images 61, in actuality, steps S12 to S14 are repeated for numerous segmented images (step S15) to acquire numerous intermediate-region information items 82, each associated with at least one (typically multiple) intermediate feature value 83. In the example shown in Fig. 4, the two target regions 62 on the right and left sides are not divided by the division of the large image 60, but one target region 62 in the center is divided into the two intermediate target regions 62b and 62c. There are also cases where one target region is divided into three or more intermediate target regions.

Then, the integration processing unit 12 integrates the intermediate-region information items 82 as necessary (part of step S16). Fig. 6 is a diagram for describing a state in which the intermediate-region information item 82 that indicates the intermediate target region 62b and the intermediate-region information item 82 that indicates the intermediate target region 62c are integrated together. This integration is executed on the intermediate-region information items 82 that have undergone run-length compression.

In the integration processing, first, it is checked, based on multiple intermediate-region information items 82 obtained in steps S12 to S15, whether each intermediate target region in one segmented region adjoins any of intermediate target regions in adjacent segmented regions in the large image. Then, this operation is performed on each segmented region to identify multiple intermediate target regions that configure one target region in the large image, i.e., multiple intermediate target regions that adjoin one another in the large image. Intermediate target regions that do not adjoin any of the intermediate target regions are each regarded as one target region as-is. In the case shown in Figs. 5A and 5B, the intermediate target regions 62b and 62c that adjoin each other are detected, whereas the intermediate target region 62a is regarded as one target region and the intermediate target region 62d is also regarded as one target region.

Then, the integration processing unit 12 integrates multiple intermediate target regions adjoining each other. Through this processing, an integrated-region information item 82a is acquired based on the intermediate-region information items 82 about the multiple intermediate target regions adjoining each other, the integrated-region information item indicating the range of an integrated target region that integrates the multiple intermediate target regions. In the case of the example shown in Figs. 5A and 5B, the intermediate-region information item 82 about the intermediate target region 62b and the intermediate-region information item 82 about the intermediate target region 62c are integrated together.

For example, in the case where the intermediate target regions 62b and 62c adjoin each other in the row direction (the right-and-left direction in Fig. 6) as shown in Fig. 6, the starting point and length of each row in a region that integrates the two intermediate target regions are obtained by integrating the two intermediate-region information items 82, and a region information item about the integrated target region, i.e., the target region 62 shown in the center in Fig. 4, is acquired as the integrated-region information item 82a. In this way, the integrated-region information item 82a that has undergone run-length compression is acquired from the multiple intermediate-region information items 82 that have undergone run-length compression. Since the acquisition of the integrated-region information item 82a is conducted with the intermediate-region information items 82 that have been compressed, it is possible to reduce the amount of memory used. Similarly in cases such as where two intermediate target regions adjoin each other in the column direction or where three or more intermediate target regions adjoin one another in both the row and column directions, the integration processing can be performed with the intermediate-region information items 82 that have been compressed.

Then, the integration processing unit 12 acquires feature values of the integrated target region as integrated feature values 83a from the intermediate feature values 83 of the multiple intermediate target regions that are integrated (part of step S16). For example, in the case where the "sum of brightness values" (or a sum of pixel values) is acquired as an intermediate feature value, a "sum of brightness values" as the integrated feature value of the integrated target region is obtained by adding "sums of brightness values" for the multiple intermediate target regions that are integrated. Similarly, in the case where the "total number of pixels" (or areas) is acquired as an intermediate feature value, a "total number of pixel" as the integrated feature value of the integrated target region is obtained by adding "total numbers of pixels" for the multiple intermediate target regions that are integrated.

More specifically, in the case where the "sums of brightness values" for two intermediate target regions that are integrated are "500" and "400" and the "total numbers of pixels" for them are "4" and "6", a "sum of brightness values" and a "total number of pixels" for the integrated target region are respectively obtained as "900" and "10".

The feature-value processing unit 13 shown in Fig. 2B accepts input of intermediate-region information items 82 that have not undergone the integration processing and the integrated-region information items 82a as region information items 84, each indicating a target region in the large image. The feature-value processing unit 13 also accepts input of the intermediate feature values 83 and the integrated feature values 83a associated with those region information items, as feature values 85. The feature-value processing unit 13 further generates new feature values 85 based on the accepted feature values 85 (part of step S17).

For example, in the case where the "sums of brightness values" for two intermediate target regions integrated are obtained respectively as "500" and "400", the "total numbers of pixels values" for them respectively as "4" and "6", the "sum of brightness values" for the integrated target region as "900", and the "total number of pixels" for it as "10", an "average of the brightness values" is acquired as "90" as one new feature value of the integrated target region.

The following description gives other examples of the intermediate feature values (and the integrated feature values) and examples of newly acquired feature values.

In the case where the "sum of brightness values", the "sum of squares of brightness values", and the "total number of pixels" are acquired as intermediate feature values and it is necessary to acquire an integrated feature value from each of these intermediate feature values, the "sum of brightness values", the "sum of squares of brightness values", and the "total number of pixels" are acquired as the integrated feature values individually by adding the "sums of brightness values" for multiple intermediate target regions integrated, by adding the "sums of squares of brightness values" for the multiple integrated target regions, and by adding the "total numbers of pixels" for the multiple integrated target regions, respectively. Then, as shown in the feature-value processing unit 13 shown in Fig. 2B, the intermediate feature values 83 (the integrated feature values 83a when integration is performed) are stored as the feature values 85 in association with the region information items 84. The feature-value processing unit 13 further uses these feature values 85 to acquire "standard deviations of brightness values" as new feature values 85. That is, for target regions that are excluded from the integration processing, the intermediate feature values 83 are used to acquire the feature values 85 representing the "standard deviations of brightness values", and for target regions that have undergone the integration processing, the integrated feature values 83a are used to acquire the feature values 85 representing the "standard deviations of brightness values".

As yet another example of the intermediate feature values, a sum of pixel values obtained by applying a Sobel filter (a primary differential filter) to intermediate target regions may be acquired as a "sum of local variations in brightness". For example, in the case where the "sum of local variations in brightness" and the "total number of pixels" are acquired as intermediate feature values and it is necessary to obtain an integrated feature value from each of these intermediate feature values, the "sum of local variations in brightness" and the "total number of pixels" are acquired as the integrated feature values individually by adding the "sums of local variations in brightness" for multiple intermediate target regions integrated and by adding the "total numbers of pixels" for the multiple intermediate target regions, respectively. Then, the feature-value processing unit 13 stores the intermediate feature values 83 or the integrated feature values 83a as the feature values 85 in association with the region information items 84. The feature-value processing unit 13 further acquires "averages of local variations in brightness" as new feature values 85 by dividing the "sums of local variations in brightness" respectively by the "total numbers of pixels". Accordingly, the degree of visual roughness of the target region is acquired as the feature values 85.

In order to apply the Sobel filter to the intermediate target regions, in the preparation of the segmented images in step S11, images that are slightly larger than the original segmented images within a certain range (a few pixels) (i.e., images with margins around it that overlap with adjacent segmented images) are prepared as the segmented images.

A "histogram of brightness values" may also be adopted as an intermediate feature value. In this case as well, when it is necessary to obtain an integrated feature value from intermediate feature values, the "histogram of brightness values" as the integrated feature value is obtained by synthesizing "histograms of brightness values" for multiple intermediate target regions integrated.

As yet another example of the intermediate feature values, a "total sum of brightness values around an intermediate target region" and the "number of pixels around an intermediate target region" may be acquired (here, processing at the boundaries of the segmented images is performed as appropriate), and a "total sum of brightness values within an intermediate target region" and the "number of pixels within an intermediate target region" may also be acquired. When it is necessary to obtain an integrated feature value from each of these intermediate feature values, a "total sum of brightness values around an integrated target region", the "number of pixels around an integrated target region", a "total sum of brightness values within an integrated target region", and the "number of pixels within an integrated target region" are acquired as the integrated target features individually by adding the "total sums of brightness values around intermediate target regions" for multiple intermediate target regions integrated, by adding the "numbers of pixels around intermediate target regions" for the multiple intermediate target regions, by adding the "total sum of brightness values within intermediate target regions" for the multiple intermediate target regions, and by adding the "number of pixels within the intermediate target regions" for the multiple intermediate target regions, respectively.

When the integration processing is not performed, the intermediate feature values 83 are used to acquire a "difference between the average value of brightness values around the target region and the average value of brightness values within the target region" as a new feature value 85. When the integration processing is performed, the integrated feature values 83a are used to acquire a "difference between the average value of brightness values around the target region and the average value of brightness values within the target region" as a new feature value 85. This feature value indicates the brightness of the target region relative to the background. In this way, the feature values 85 are not limited to those derived from only the information about the interior of the target region.

As described above, the intermediate feature values are interim feature values from which the feature values of an integrated target region can be derived without using image data about the intermediate target regions. In yet other words, the intermediate feature values are information with less content (typically significantly less content) than image data about the intermediate target regions and are also information from which integrated feature values of the integrated target region can be derived.

The feature-value processing unit 13 further acquires a shape feature value 86 related to the shape of the target region as an additional feature value from the region information items 84 (part of step S17). As already described, when an intermediate target region is not integrated, the region information item 84 corresponds to the intermediate-region information item 82, and when an intermediate target region is integrated, the region information item 84 is the integrated-region information item 82a. The shape feature value 86 is a feature value that can be derived from information that has undergone run-length compression and indicates shape. Examples of the shape feature value 86 include the contour length of the target region, an approximate ellipse of the target region, an inscribed circle of the target region, a circumscribed rectangle of the target region, and the center of gravity of the target region. The shape feature value 86 is also stored in association with the region information item 84. By acquiring the shape feature value 86 from the region information item 84 that has been compressed, it is possible to reduce the amount of memory used. Other examples of the shape feature value 86 include the number of branches and the number of ends in the target region of a linear shape, i.e., the number of branch points and the number of end points when thinning is performed to the target region.

If there is no need to acquire the shape feature value 86, the integration of the intermediate-region information items 82 in step S16 is unnecessary. In order to calculate the feature values related to brightness, it is enough to acquire the contact relationship of the intermediate target regions in step S16.

The feature values 85 and the shape feature values 86 are used in analysis processing or recognition processing in subsequent steps. In the analysis processing, for example, a count of target regions that satisfy specific conditions, or the relationship between specific feature values and the number of target regions is acquired. In the recognition processing, an object indicated by each target region is identified, or a target region that should be excluded from a recognition target is identified.

In the feature-value acquisition device 1, each time steps S12 to S15 are repeated, the memory that stores one segmented image releases the area in which the one segmented image is stored, and the next one segmented image is stored in the memory. That is, the memory successively stores a segmented image selected from multiple segmented images. Thus, the memory does not need to store the entire large image at once, and it is possible to acquire feature values (including shape feature values; the same also applies below) of each target image in a large image if the memory can store one segmented-image data item 81 in order to process one segmented image. As a result, it is possible to reduce the amount of memory required to acquire the feature values of each target region in a large image and to reduce the cost of acquiring feature values from a large image. Feature values to be acquired are the same as those that are acquired when the entire original large image is stored as-is in the memory and processed.

The configuration and operations of the feature-value acquisition device 1 may be modified in various ways.

The method of extracting intermediate target regions from each segmented image is not limited to using a learning model. For example, the intermediate target regions may be extracted simply based on the brightness values of pixels. The intermediate target regions may also be extracted based on pixel color (e.g., hue).

The intermediate-region information items 82 (and the integrated-region information items 82a and the region information items 84) are preferably information about a region that has undergone run-length compression. The run-length compression is not limited to a combination of "starting coordinates" and "length" of each row in a region, and may be a combination of "starting coordinates" and "endpoint coordinates" of each row. The intermediate-region information items 82 may also be information that is compressed by a different method other than run-length compression. Preferably, the intermediate-region information items 82 are information that can undergo the integration processing in a compressed state. The compression method used for the intermediate-region information items 82 is a method that can restore information without any degradation in principle.

Any other information may be adopted as the intermediate region information items 82 as long as it indicates regions and has less content than image information about the regions. This reduces the amount of memory required for computations. The term "memory" as used herein refers to memory that is rewritable and randomly accessible (at high speed) during computation like RAM, and doe not refer to a storage area like a fixed disk.

Intermediate feature values 83 associated with one intermediate-region information item 82 are not limited to those obtained from one large image. A plurality of images of one target object that are captured using different light sources, e.g., a combination of images such as bright-field images, dark-field images, and fluorescence images may be prepared as a large image.

A large image is not limited to a stained cell image. For example, a large image may be an inspection target image that includes numerous target regions (e.g., candidate defects). Images acquired by capturing an image of a group of numerous inspection target objects may be treated as a large image.

The configurations of the above-described preferred embodiment and variations may be appropriately combined as long as there are no mutual inconsistencies.

While the invention has been shown and described in detail, the foregoing description is in all aspects illustrative and not restrictive. It is therefore understood that numerous modifications and variations can be devised without departing from the scope of the invention.

## Claims

1. A feature-value acquisition method of acquiring a feature value of a target region in a large image, the feature-value acquisition method comprising:
a) preparing a plurality of segmented images obtained by dividing a large image;
b) extracting an intermediate target region from one segmented image and acquiring an intermediate-region information item and an intermediate feature value, the intermediate-region information item indicating a range of said intermediate target region, the intermediate feature value being a feature value related to said intermediate target region;
c) repeating said operation b), using each of said plurality of segmented images as said one segmented image; and
d) based on a plurality of intermediate-region information items obtained by said operation c), acquiring a feature value of a region that integrates a plurality of intermediate target regions adjoining each other in said large image from intermediate feature values of said plurality of intermediate target regions.

2. The feature-value acquisition method according to claim 1, wherein
said intermediate-region information item is obtained by run-length compression of an information item that indicates the range of said intermediate target region.

3. The feature-value acquisition method according to claim 1 or 2, wherein
said intermediate feature value is a feature value based on brightness in said intermediate target region.

4. The feature-value acquisition method according to claim 3, wherein
said intermediate feature value includes at least one feature value of said intermediate target region selected from a sum of brightness values of pixels, a sum of squares of brightness values of pixels, a sum of local variations in brightness values of pixels, and a histogram of brightness values of pixels.

5. The feature-value acquisition method according to any one of claims 1 to 4, wherein
each time said operation b) is repeated in said operation c), memory that stores said one segmented image releases an area in which said one segmented image is stored, and a next one segmented image is stored in said memory.

6. The feature-value acquisition method according to any one of claims 1 to 5, wherein
said operation d) involves acquiring a region information item about an integrated target region that integrates said plurality of intermediate target regions, based on said plurality of intermediate-region information items about said plurality of intermediate target regions,
the feature-value acquisition method further comprising:
e) acquiring a feature value related to a shape of said integrated target region from said region information item about said integrated target region.

7. A feature-value acquisition device that acquires a feature value of a target region in a large image, the feature-value acquisition device comprising:
memory that successively stores a segmented image selected from a plurality of segmented images obtained by dividing a large image;
a segmented-region processing unit that extracts an intermediate target region from a segmented image stored in said memory and acquires an intermediate-region information item and an intermediate feature value, the intermediate-region information item indicating a range of said intermediate target region, the intermediate feature value being a feature value of said intermediate target region; and
an integration processing unit that, based on a plurality of intermediate-region information items, acquires a feature value of a region that integrates a plurality of intermediate target regions adjoining each other in said large image from intermediate feature values of said plurality of intermediate target regions.
